# DEMANDE DE BREVET EUROPEEN

(11) **EP 0 933 616 A1**
(43) Date de publication de la demande: **04.08.1999**
(21) Numéro de dépôt: 99400244.2
(22) Date de dépôt: 03.02.1999
(51) Int. Cl.: G01C 21/20, G08G 1/0968

(54) **Système et procédés de guidage dynamique d'un véhicule automobile**

(30) Priorité: 03.02.1998 FR 9801235
(71) Demandeur: RENAULT, 92109 Boulogne-Billancourt (FR)
(72) Inventeur: Granier, Emmanuel, 92800 Puteaux (FR); Letemple, Jean-Pierre, 75016 Paris (FR); Moussa,Ralph, 75016 Paris (FR)

(57) **Abrégé**

L'invention concerne un système de guidage dynamique d'un véhicule constitué d'une part d'un dispositif embarqué (1) avec un module de communication avec un serveur distant (2), un module de localisation (4), une mémoire (5), un module de commande (6) pour la saisie des requêtes de l'utilisateur, un module de restitution (7) de l'information trafic et du guidage, une unité de traitement électronique (8), et d'autre part dudit serveur distant (2) avec un module de communication (9), une unité de traitement électronique (13), une base de données d'information trafic et deux bases de données cartographiques détaillée (10) et simplifiée (11), obtenue par modélisation des routes de la base détaillée. Ces bases de données peuvent être téléchargées dans le dispositif embarqué.

Elle concerne également différents procédés de guidage d'un véhicule équipé d'un tel système de guidage, selon plusieurs modes de réalisation.

## Description

La présente invention concerne un système de guidage dynamique d'un véhicule, ainsi que les procédés de guidage réalisables grâce à ce système, exploitant les données cartographiques et les informations sur le trafic routier, reçues d'un serveur distant. Dans le but de limiter le temps de communication entre un dispositif embarqué sur le véhicule et le serveur distant, les données cartographiques envoyées par le serveur vers le véhicule sont codées à l'aide de modèles paramétriques de route.

Avec l'émergence des services télématiques liés aux nouvelles technologies de communication mobile, les systèmes de navigation offrant la possibilité d'un guidage dynamique doivent tenir compte des utilisateurs occasionnels de cette prestation de guidage, qui ne souhaitent pas investir dans un système dédié au guidage. De tels utilisateurs recherchent un système de navigation et d'informations routières de faible coût, pouvant éventuellement réutiliser un système embarqué existant dans le véhicule, tel qu'un module de téléphonie, un terminal du réseau Internet, un module d'appel d'urgence ou de gestion de flotte par exemple.

Il existe actuellement des systèmes de guidage complètement autonome, de type CARIN de Philips, sans échange d'informations avec l'extérieur, ne permettant pas le calcul d'itinéraires tenant compte des situations de trafic routier en temps réel et dont la mise à jour de la cartographie embarquée impose le remplacement du support de données.

D'autres systèmes de guidage autonomes reçoivent cependant de l'information de trafic routier d'un centre serveur par connexion à un radiotéléphone GSM par exemple, comme le système SOCRATES, mais le problème posé par la gestion du rapprochement des bases de données du réseau routier au format G.D.F. (Geographic Data File) et des informations trafic R.D.S.-T.M.C. (Radio Data System - Traffic Message Channel), qui s'appuie sur sa propre base de données, n'est pas résolu.

Il existe également des systèmes de guidage autonomes recevant des itinéraires dynamiques calculés par un centre serveur et transmis au véhicule, la base de données embarquée dans le véhicule servant surtout au guidage. Un exemple est décrit dans le brevet GB-3 206 738 de Mercedez-Benz, concernant un système de guidage dynamique dans lequel seule une liste de points de passage particuliers est envoyée au véhicule, pour éviter les difficultés de circulation dans le calcul des itinéraires, réalisé par le système embarqué. Cependant, les problèmes de mise à jour des bases de données et du coût du système demeurent.

Une solution est apportée par le système décrit dans la demande de brevet allemand DE-19531824 de V.D.O., qui transmet par le réseau G.S.M. l'itinéraire calculé par un serveur, ainsi que des consignes de guidage sous la forme de modes de franchissement de carrefours. Un inconvénient de ce système tient à la mauvaise qualité des consignes de guidage insuffisamment claires. De plus, la détermination de la position du véhicule sur le réseau routier, ainsi que la détection d'une sortie de l'itinéraire calculé sont impossibles, puisqu'aucune information sur la description des routes reliant les carrefours n'est transmise au véhicule.

Le but de l'invention est de pallier ces inconvénients, en réalisant le téléchargement des cartographies, ou d'extraits de cartographies, basés sur des modèles paramétriques de route.

Pour cela, un premier objet de l'invention est un système de guidage routier dynamique d'un véhicule, comprenant un dispositif embarqué dans le véhicule recevant des informations d'un serveur distant du véhicule, caractérisé en ce que ledit dispositif embarqué comprend :
- un premier module mobile de communication avec le serveur ;
- un module de localisation délivrant la position géographique du véhicule ;
- une mémoire destinée à stocker les données reçues du serveur distant ;
- un module de commande permettant la saisie des requêtes de l'utilisateur, à l'aide de boutons, d'une surface tactile, d'une boule de désignation, d'une télécommande ou d'un microphone ;
- un module de restitution de l'information trafic et/ou de présentation des informations de guidage ;
- une première unité de traitement électronique ;
et en ce que ledit serveur distant comprend :
- un second module fixe de communication avec le dispositif embarqué ;
- une base de données cartographiques détaillée ;
- une base de données cartographiques simplifiée ;
- une base de données d'informations sur le trafic routier ;
- une seconde unité de traitement électronique ;

La cartographie simplifiée, basée sur des modèles paramétriques de routes, est générée à partir de la cartographie détaillée.

Ce système de guidage selon l'invention peut être obtenu à partir de plusieurs modes de réalisation.

D'autres objets de l'invention concernent des procédés de guidage d'un véhicule équipé par un des modes de réalisation du système de guidage.

D'autres caractéristiques et avantages de l'invention apparaîtront à la lecture de la description de plusieurs exemples de réalisation, non limitatifs, illustrée par les figures suivantes qui sont :
- la figure 1 : un schéma de l'architecture fonctionnelle du système de guidage dynamique selon l'invention ;
- la figure 2 : un schéma fonctionnel d'un exemple de réalisation du système selon l'invention, dans lequel le calcul d'itinéraire est effectué par un serveur distant uniquement ;
- la figure 3 : un schéma fonctionnel d'un exemple de réalisation du système selon l'invention, dans lequel le calcul d'itinéraire est effectué par un serveur distant et partiellement par le dispositif embarqué ;
- la figure 4 : un schéma fonctionnel d'un exemple de réalisation du système selon l'invention, dans lequel le calcul d'itinéraire est effectué par un dispositif embarqué uniquement ;
- figure 5 : un exemple de réalisation d'une route dans une base de données simplifiée ;
- les figures 6 à 9 : des exemples non limitatifs de modélisation du réseau routier dans une base de données simplifiée.

Les éléments portant les mêmes références dans les différentes figures remplissent les mêmes fonctions en vue des mêmes résultats.

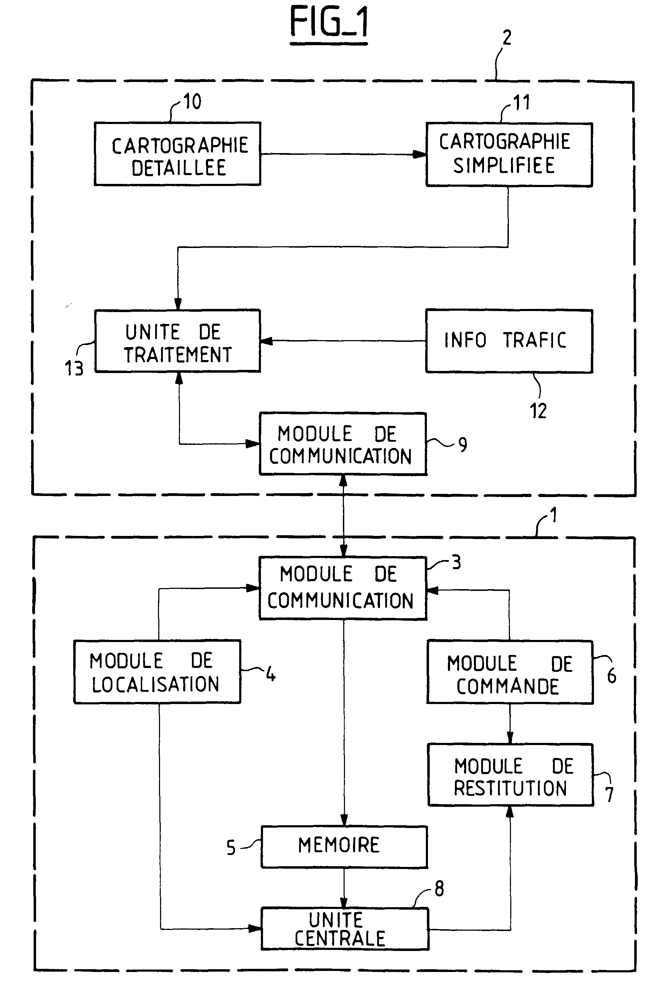

Selon l'architecture fonctionnelle représentée sur la figure 1, le système de guidage dynamique d'un véhicule selon l'invention est composé d'un dispositif 1 embarqué sur le véhicule et d'un serveur 2 distant, extérieur au véhicule.

Le dispositif embarqué 1 comprend :
- un premier module 3 mobile de communication avec le serveur 2, selon une communication unidirectionnelle ou bidirectionnelle selon les cas décrits par la suite, qui peut être basé par exemple sur un réseau de téléphonie cellulaire comme le réseau G.S.M. permettant l'échange de paroles et de données entre le serveur distant et le dispositif embarqué ;
- un module 4 de localisation mobile, délivrant la position géographique du véhicule ;
- une mémoire 5 destinée à stocker les données envoyées par le serveur distant ;
- un module 6 de commande, permettant à l'utilisateur de saisir des requêtes, comme le guidage vers une destination, composé par exemple d'un ensemble de boutons, d'une surface tactile, d'une boule de désignation, - "track ball" en vocable anglo-saxon -, d'une télécommande, ou bien encore d'un microphone qui capte les paroles de l'utilisateur ;
- un module 7 de restitution de l'information sur le trafic routier et/ou de présentation des informations de guidage à l'utilisateur, constitué d'un haut-parleur pour la diffusion des informations sonores, éventuellement complété d'un afficheur pour la présentation des données textuelles ou graphiques ;
- une première unité de traitement électronique 8, qui réalise la prestation de guidage notamment.

Quant au serveur distant 2, il est composé de :
- un second module 9 fixe de communication avec le dispositif embarqué 1 ;
- une base de donnée cartographiques 10 détaillée du réseau routier ;
- une base de données cartographiques 11 simplifiée du réseau routier ;
- une base de données 12 d'informations sur le trafic routier ;
- une seconde unité de traitement électronique 13 destinée à interpréter les requêtes émises par l'utilisateur, transmises par le premier module 3 de communication du dispositif embarqué 1 et reçues par le second module 9 de communication du serveur 2, et à les satisfaire.

Les bases de données cartographiques détaillée 10 d'une part et concernant le trafic routier 12 d'autre part peuvent être extérieures au serveur distant 2 et accessibles par un réseau de télécommunication, par exemple au travers d'Internet.

De plus, la base de données cartographiques 11 simplifiée et la base de données 12 d'informations routières peuvent être confondues.

La cartographie simplifiée du réseau routier est obtenue par modélisation des routes, de sorte qu'elle n'occupe pas une mémoire de grande taille. Dans le dispositif embarqué, il n'est pas nécessaire de disposer de cartographies couvrant une région de grande superficie ; en effet, selon la position du véhicule et sa destination donnée par l'utilisateur, seule la cartographie utile peut être téléchargée du serveur distant vers le véhicule, cette cartographie pouvant même se réduire à un itinéraire.

Grâce à cette cartographie modélisée ou simplifiée, les modèles paramétriques de route limitent fortement le nombre de données cartographiques à transmettre, ce qui a pour avantage de réduire les temps et les coûts de communication entre le serveur et le véhicule. A titre d'exemple, dans une base de données détaillée classique, la couverture de la région Ile-de-France nécessite une capacité de stockage d'environ 20 méga-octets. Par contre, si on utilise une base de données simplifiée basée sur les modèles paramétriques de routes, elle occupe seulement 200 kilo-octets pour la même région, sans dégrader la qualité de la prestation de guidage du système.

Le dispositif embarqué 1 peut être utilisé pour plusieurs autres prestations que celles de guidage, comme la gestion de flotte, l'appel d'urgence ou autres applications télématiques, ce qui réduit d'autant son coût.

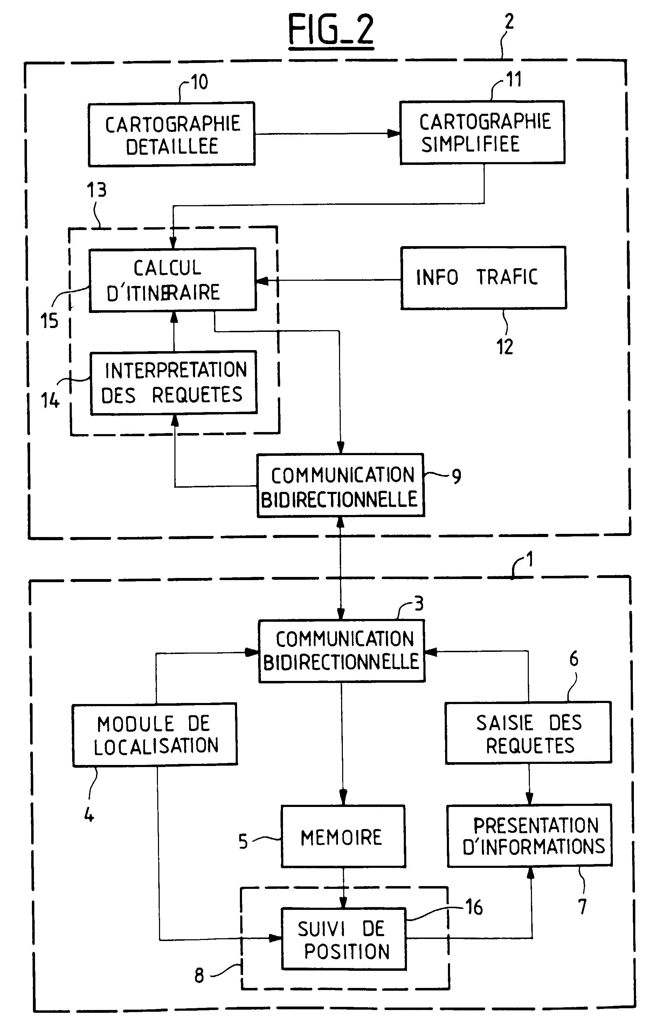

La figure 2 est un schéma fonctionnel d'un premier exemple de réalisation du système de guidage dynamique selon l'invention, dans lequel le calcul d'itinéraire est effectué par le serveur distant.

Selon ce mode de réalisation particulier, dans le dispositif embarqué 1 dans le véhicule, le premier module 3 de communication mobile est bidirectionnel, permettant l'échange réciproque de paroles et de données entre le système embarqué et le serveur distant.

La mémoire 5, de taille limitée, stocke les données reçues du serveur distant 2, c'est-à-dire l'itinéraire optimal calculé avec les modèles de routes utiles pour reconstituer les routes à partir de la base de données cartographiques simplifiée. Pour cela, elle peut comprendre une zone spécifique de stockage des messages vocaux envoyés par le serveur.

La première unité de traitement électronique 8 assure le suivi de position du véhicule sur l'itinéraire, grâce à un module 16.

Dans le serveur distant 2, le second module 9 de communication est bidirectionnel.

La seconde unité de traitement électronique 13 comprend d'une part un module 14 d'interprétation des requêtes de l'utilisateur, qu'elles soient sous forme vocale ou non, envoyées par le premier module 3 de communication du dispositif embarqué 1. Il peut être constitué de moyens de reconnaissance de parole, éventuellement complétés par un opérateur pour le cas où les algorithmes de reconnaissance de la parole échoueraient.

Elle comprend d'autre part un module 15 de calcul d'un itinéraire optimal, à partir des données issues de la base de données cartographiques 11 simplifiée et de la base de données 12 d'information trafic.

Le procédé de fonctionnement de ce mode de réalisation particulier comprend les phases suivantes.

Une première phase de demande de guidage par l'utilisateur du véhicule, réalisée par le dispositif embarqué 1, comprend une étape d'établissement d'une communication entre son module de communication et celui du serveur distant.

L'utilisateur compose ensuite une requête, comprenant principalement la destination vers laquelle l'utilisateur veut être guidé, ainsi que plusieurs points de passage spécifiés éventuellement. Cette requête, établie à l'aide du module 6 de commande, se présente sous la forme de signaux électriques correspondant aux touches d'un clavier ou préférablement de paroles converties en signaux électriques par un microphone.

Les signaux électriques correspondants sont émis d'un module de communication à l'autre, en utilisant un canal d'échange de paroles ou de données. Simultanément, le module 4 de localisation envoie également la position actuelle du véhicule.

Une seconde phase de calcul de l'itinéraire demandé par l'utilisateur entre la position actuelle du véhicule et sa destination donnée est réalisée par le serveur distant et consiste tout d'abord en une interprétation de la requête de l'utilisateur par le module 14, qui la traduit en commandes compréhensibles par le module 15 de calcul de l'itinéraire. Dans le cas le plus ergonomique où la requête est composée de paroles, elle est interprétée par des moyens de reconnaissance de la parole inclus dans le module 14. Un opérateur peut traduire manuellement la commande vocale si ces derniers sont défectueux.

Ainsi, le module 15 de calcul d'un itinéraire optimal reçoit cette requête principalement composée de la destination vers laquelle l'utilisateur souhaite être guidé, avec éventuellement des points de passage, et la localisation actuelle du véhicule. Ce module 15 interroge les bases de données cartographiques 11 et d'information trafic 12 pour en déduire un itinéraire optimal en temps et en distance.

Cet itinéraire est constitué de coordonnées géographiques de points du réseau routier, comme les carrefours, et de tronçons décrits à l'aide de modèles paramétriques de route. A chaque point et à chaque tronçon sont associées des informations textuelles ou vocales correspondant aux directions à suivre, la distance des points du réseau à laquelle devront être émises les informations vocales, et la longueur de ces messages vocaux.

Puis, le module 9 de communication transmet ces informations au module 3 du dispositif embarqué, au moyen du canal vocal et du canal des données numériques.

Une troisième phase consiste alors à mémoriser, par le dispositif embarqué 1, toutes ces informations transmises par le serveur distant 2, dans la mémoire 5. Un module 16 de suivi de position, appartenant à la première unité de traitement 8, reconstitue les routes de l'itinéraire à partir des modèles paramétriques transmis par le serveur distant et stockés dans ladite mémoire. Cette opération peut aussi être réalisée par la transmission, par le serveur, d'un simple identificateur permettant de pointer sur une liste de modèles préalablement connus du système embarqué, stockée dans la mémoire prévue à cet effet. La route est déterminée par application du modèle aux autres données définissant la route, telles que l'équation de la route, ses paramètres, les conditions aux extrémités, etc ... .

Disposant de la forme des routes de l'itinéraire calculé et de la localisation du véhicule fournie par le module 4, le suivi de position est alors capable d'identifier l'axe sur lequel circule le véhicule et sa position sur cet axe en vue de son guidage vers la destination désignée.

Le module 16 de suivi de position effectue la comparaison entre le trajet du véhicule et l'itinéraire calculé stocké dans la mémoire 5. Dès que la distance entre la localisation et un point de décision courant est inférieure aux distances de présentation de message également stockées dans la mémoire 5, le module de suivi de position commande au module 7 de présentation des informations l'affichage des indications textuelles correspondantes et l'émission du message vocal.

L'utilisateur peut demander à tout moment la réémission ou un nouvel affichage des messages précédents à l'aide du module 6 de saisie de requêtes.

Il peut de plus détecter une sortie de cet itinéraire et en avertir l'utilisateur par des indications visuelles et sonores.
En effet, il vérifie que le véhicule suit le trajet conseillé à l'aide des modèles paramétriques des tronçons routiers. Dans le cas contraire, l'utilisateur peut rejoindre l'itinéraire conseillé grâce notamment à une indication de direction vers un point de cet itinéraire, sous forme d'affichage d'une flèche graphique par exemple. Dans une autre version, l'utilisateur peut envoyer une nouvelle requête de guidage vers le serveur distant 2 qui recalculera alors un nouvel itinéraire.

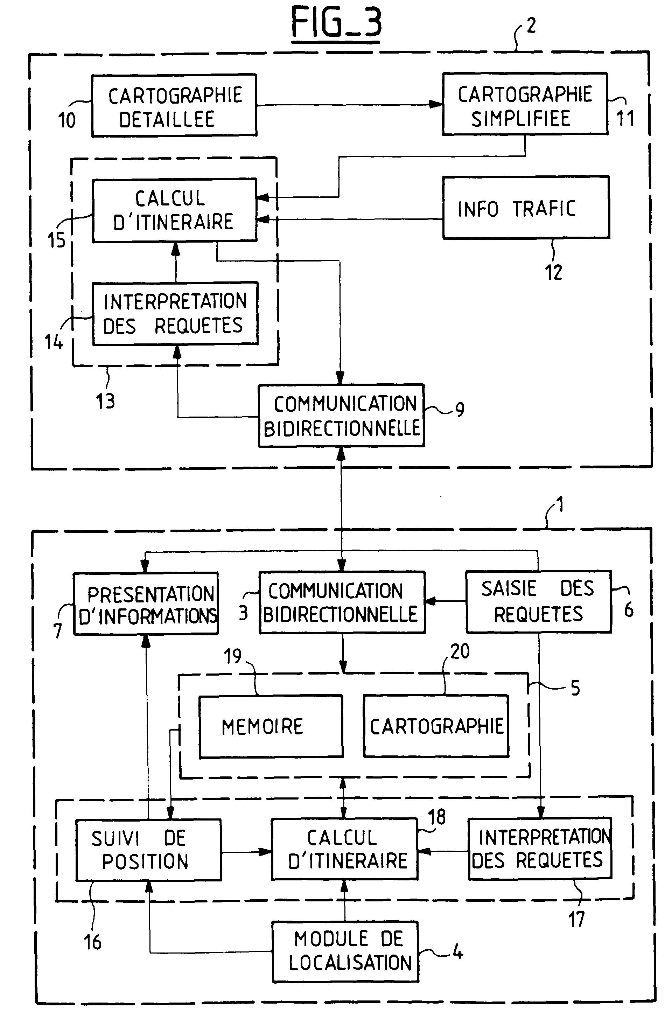

La figure 3 est un schéma fonctionnel d'un deuxième exemple de réalisation du système selon l'invention, dans lequel le calcul d'itinéraire est effectué par le serveur distant, avec possibilité pour le dispositif embarqué de calculer lui-même un itinéraire dans une bande localisée autour de l'itinéraire principal.

Pour cela, un extrait de la cartographie simplifiée, stockée dans le serveur distant 2, est transmis au dispositif embarqué dans le véhicule, cet extrait correspondant à une bande de déplacement autour de l'itinéraire calculé, qui couvre d'éventuels déplacements de l'utilisateur hors de cet itinéraire.

Grâce à cette bande cartographiée, mémorisée dans le dispositif embarqué 1, ce dernier peut calculer un itinéraire ramenant le véhicule vers l'itinéraire initial et le guider grâce aux indications de guidage contenues dans cet extrait de cartographie.

L'utilisation du modèle paramétrique de routes réduit considérablement la taille de l'extrait de cartographie correspondant à cette bande de déplacement, tout en maintenant une bonne qualité de suivi de position et de guidage, avec un coût de communication réduit.

Selon ce deuxième mode particulier de réalisation du système de guidage, le premier module 3 de communication du dispositif embarqué assure la communication mobile et bidirectionnelle avec le serveur distant 2, le module 4 fournit la localisation du véhicule en temps réel, le module 6 permet la saisie des requêtes de l'utilisateur qui sont interprétées par un module 17 de l'unité de traitement électronique 8, au niveau du dispositif embarqué 1.

Cette même unité de traitement comprend de plus un module 16 de suivi de position du véhicule sur l'itinéraire, ainsi qu'un module 18 de calcul embarqué d'un itinéraire à partir de l'extrait de cartographie simplifiée envoyée par le serveur et couvrant une bande de déplacement autour de l'itinéraire calculé par le serveur. Un module 7 assure la présentation des informations de guidage à l'utilisateur, par synthèse vocale et afficheur pour les données textuelles ou graphiques. La mémoire 5 comprend une première zone 19 pour la mémorisation des données concernant l'itinéraire, reçues du serveur 2, et une deuxième zone 20 pour mémoriser les modèles de routes utiles pour reconstituer les routes de l'itinéraire à partir de la cartographie simplifiée 11, et un extrait de cette même cartographie simplifiée 11 correspondant à la bande de déplacement du véhicule autour de l'itinéraire calculé.

Quant au serveur 2 distant du véhicule, il comprend les mêmes éléments que dans le premier mode de réalisation décrit à propos de la figure 2, avec un module 9 assurant une communication fixe bidirectionnelle.

Le procédé de fonctionnement de ce deuxième mode de réalisation particulier comprend une première phase de demande de guidage, par l'utilisateur du véhicule, jusqu'à une destination qu'il indique avec éventuellement des points de passage, à partir de sa localisation actuelle. Cette première phase est identique à la première phase du mode de réalisation précédent du système de guidage.

Le procédé comprend une deuxième phase de calcul d'un itinéraire optimal à partir de la base de données cartographiques simplifiée 11 et de la base de données 12 d'information trafic, réalisée de la même façon par le module 15 de calcul d'itinéraire que lors du premier mode de réalisation du système.

Par contre, ce module 15 de calcul détermine également une bande de déplacement autour de l'itinéraire préalablement calculé, qui est un extrait de la cartographie simplifiée 11. Cette bande de déplacement peut être définie selon des critères géométriques, comme la largeur de bande, qui peut diminuer quand on se rapproche du point de destination, par exemple. Elle peut aussi être établie en fonction de la longueur de l'itinéraire, sa largeur étant d'autant plus étroite que l'itinéraire est long, pour limiter la quantité de données à transmettre et réaliser ainsi un compromis entre qualité de prestation et coût du service offert à l'utilisateur.

Une quatrième phase de guidage dynamique, réalisée par le dispositif embarqué 1, comprend tout d'abord la mise en mémoire de l'itinéraire calculé dans la première zone 19 et de la bande de déplacement dans la deuxième zone 20. Comme précédemment, le guidage consiste ensuite en une reconstitution des routes de l'itinéraire par le module 16 de suivi de position, l'identification de la route de circulation du véhicule et la délivrance des indications de guidage vers la destination si l'unité de traitement 8 vérifie que le véhicule se trouve bien sur l'itinéraire calculé.

Cette vérification est le résultat d'une comparaison entre le trajet réellement suivi par le véhicule et l'itinéraire calculé à l'aide des modèles paramétriques de routes.

Si l'utilisateur circule hors de l'itinéraire, mais sur un axe de la bande de déplacement définie autour de l'itinéraire, le module 18 recalcule un itinéraire pour le guider vers l'itinéraire initial puis sa destination.

Si l'utilisateur circule hors de la bande de déplacement, le module 7 de présentation d'informations peut l'aider à y revenir par affichage d'une flèche indiquant la direction d'un point de la bande ou la destination.

Selon une autre version, l'utilisateur lui-même peut envoyer une nouvelle requête de guidage vers le serveur distant 2, pour un calcul d'un nouvel itinéraire avec une nouvelle bande de déplacement.

Dans le cas où le module 16 de suivi de position ne parvient pas à localiser le véhicule sur un des axes modélisés, bien que celui-ci circule dans la bande de déplacement, car toutes les voies de circulation ne sont pas obligatoirement incluses dans la cartographie simplifiée, le dispositif embarqué aide le conducteur à revenir sur le réseau des routes incluses, par affichage d'une flèche indiquant un point de la bande de déplacement ou la destination.

Le système de guidage dynamique selon l'invention peut également être réalisé selon un troisième mode particulier, dans lequel l'essentiel du guidage est effectué par le dispositif embarqué, alors que le rôle du serveur distant est de transmettre les bases de données cartographiques mises à jour. La durée de transmission est relativement courte grâce aux modèles paramétriques de routes.

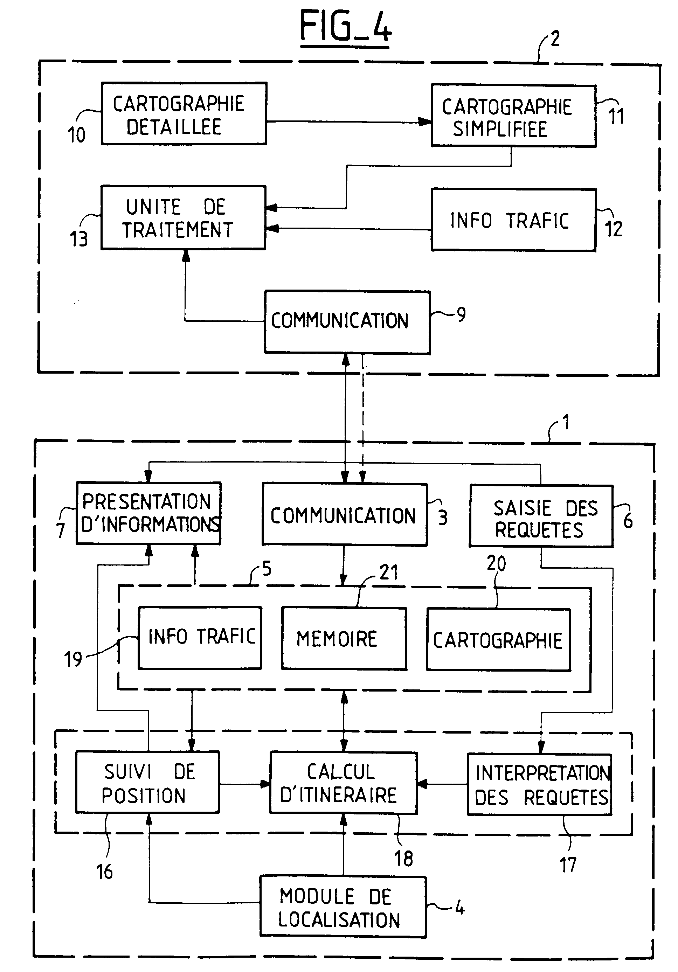

La figure 4 est un schéma fonctionnel de ce troisième mode de réalisation de l'invention. Le dispositif embarqué comprend un module 3 de communication, qui est unidirectionnel autorisant une communication du serveur vers le véhicule dans un premier cas, représentée par une simple flèche en pointillés. Il peut être basé sur les modes de diffusion de données, comme le protocole SWIFT pour les émissions radiophoniques en modulation de fréquence, ou le D.A.B. par exemple.

Dans un deuxième cas, le module 3 n'est plus seulement un récepteur mais est basé sur un mode d'échanges de données prévus dans certains réseaux cellulaires de téléphonie, comme le réseau G.S.M., autorisant une communication bidirectionnelle point à point entre le dispositif embarqué et le serveur, représentée symboliquement par une double flèche en trait plein.

Comme pour les précédents modes de réalisation, le dispositif embarqué comprend un module 6 de saisie des requêtes de l'utilisateur, un module 7 de présentation des informations de guidage dans le véhicule, un module 4 de localisation du véhicule en temps réel, une unité de traitement électronique 8 comprenant un module 17 d'interprétation des requêtes reçues du module de saisie, un module 18 de calcul d'un itinéraire optimal à partir des commandes envoyées par le module 17 et des informations stockées dans la mémoire 5, et un module 16 de suivi de position du véhicule à partir de sa localisation, des modèles de routes et de la cartographie simplifiée mémorisés.

La mémoire 5 est composée d'une première zone 19 où sont stockées diverses informations comme le trafic routier, une deuxième zone 20 où est stockée la cartographie simplifiée provenant de la base de données 11 du serveur 2, et une troisième zone 21 où sont stockés les modèles de routes qui peuvent être téléchargés en même temps que la cartographie simplifiée.

Le serveur distant 2 est composé dans un premier cas d'un émetteur, de type SWIFT, DAB, etc ..., diffusant des données, et dans un deuxième cas d'un émetteur-récepteur compatible avec les protocoles d'échange de données des réseaux de radiotéléphonie cellulaire.

Il comporte également les mêmes bases de données que les exemples de réalisation précédents et une deuxième unité de traitement électronique.

Le procédé de fonctionnement de ce troisième mode de réalisation particulier d'un système de guidage selon l'invention est basé sur la transmission de la base de données cartographiques simplifiée 11 au dispositif embarqué 1 dans le véhicule, qui va effectuer le calcul d'itinéraire optimal lui-même ainsi que le guidage dynamique du véhicule.

Dans le premier cas où le module 3 est unidirectionnel du serveur vers le véhicule, la première partie du procédé consiste à transmettre périodiquement la cartographie simplifiée du serveur distant 2 au dispositif embarqué 1, qui la stocke dans la deuxième zone 20 de la mémoire 5. Cette cartographie est remise à jour périodiquement par le serveur dont le module 9 de communication réalise l'émission rapide, grâce au fait que cette cartographie simplifiée 11 utilise des modèles paramétriques de route. Ainsi, la mémoire 5 peut stocker une zone géographique étendue, telle que le territoire d'un pays, pouvant être définie comme un disque de rayon déterminé ayant pour centre le module 9 d'émission du serveur 2.

Le premier module 3 de communication unidirectionnelle du véhicule scrute régulièrement les données envoyées par le serveur distant et compare la version de la cartographie modélisée émise, définie par son numéro ou sa date de modification, avec la version sauvegardée dans la deuxième mémoire 20. Si la version mémorisée est antérieure à la version émise, elle est remplacée par cette dernière dans la mémoire.

Il est possible de structurer la cartographie simplifiée du réseau routier en zones géographiques, comme les départements d'un pays par exemple. Dans ce cas, les numéros de version sont gérés pour chaque zone de découpage remise à jour et le module 3 de réception du véhicule effectue la comparaison entre la version mémorisée et la version envoyée pour chacune d'elles. Un intérêt de cette possibilité est l'émission plus fréquente des zones géographiques voisines de l'émetteur.

Selon le second cas de ce troisième mode de réalisation pour lequel les modules 3 et 9 de communication entre le véhicule et le serveur sont des émetteurs-récepteurs compatibles avec un réseau radiotéléphonique cellulaire, le module 9 du serveur peut contacter le véhicule pour l'avertir qu'une nouvelle version de la base de données est disponible et le module 3 du dispositif embarqué 1 peut joindre le serveur pour demander un téléchargement de la base de données cartographiques.

La seconde partie du procédé de fonctionnement de ce troisième mode de réalisation est la réalisation du guidage dynamique du véhicule selon une procédure classique.

En permanence, le module 3 de communication du dispositif embarqué 1 scrute les informations routières envoyées par le serveur 2 et les stocke dans une zone mémoire temporaire 21.

Quand l'utilisateur compose une requête de guidage comprenant la destination et éventuellement quelques points de passage, cette requête est interprétée par le module 17 qui délivre des commandes à l'unité de traitement 8. Le module 18 de calcul d'itinéraire reçoit les informations stockées dans la mémoire 5, concernant le trafic routier et la cartographie, et détermine l'itinéraire optimal à partir de la position du véhicule localisée grâce au module 4 de localisation, éventuellement affinée par le module 16 de suivi de position.

Le calcul d'itinéraire étant fait, le guidage a lieu et le module 16 de suivi de position du véhicule reconstitue les routes autour de sa position. Pour cela, il cherche, dans une liste stockée dans la troisième zone mémoire 21, le modèle correspondant à l'identificateur du modèle transmis pour chaque route par le serveur 2.

Comme cela a été décrit pour le deuxième mode de réalisation, le guidage consiste, après cette reconstitution des routes de l'itinéraire et l'identification de la route de circulation du véhicule, à délivrer des indications de guidage si l'unité de traitement 8 a vérifié que le véhicule circule bien sur l'itinéraire calculé. Cette vérification est identique à celle déjà décrite.

Le troisième mode de réalisation peut être basé, selon une autre variante, sur la transmission de la base de données cartographiques simplifiée, décomposée en au moins deux niveaux, un premier niveau dénommé "base de données globale" qui comprend essentiellement les grands axes de circulation sur une zone géographique étendue, et un deuxième niveau appelé "base de données locale" qui comprend une zone limitée au voisinage du module émetteur 9 du serveur 2.

La phase de transmission de cette base de données à deux niveaux se déroule de la manière suivante : tout d'abord, le module 9 transmet périodiquement la base de données globale contenant principalement les grands axes et permettant par exemple de relier les villes entre elles, constituant ainsi une base de données interurbaine. Cette base globale peut s'étendre à une zone très étendue, telle un continent comme l'Europe, grâce aux modèles paramétriques de routes. Comme dans la variante précédente, le dispositif embarqué 1 compare la version de la cartographie mémorisée avec la version émise et la remplace au besoin.

Puis, le module 9 de communication diffuse également une cartographie plus détaillée d'une zone limitée autour de l'émetteur de chaque serveur, correspondant par exemple à une ville rencontrée sur le parcours du véhicule. Il transmet un identificateur correspondant au nom de la ville et un numéro de version pour permettre au dispositif embarqué de mettre à jour la base de données sauvegardée dans la deuxième zone mémoire 20. Ainsi, à l'approche d'une ville, l'unité de traitement du dispositif embarqué compare la cartographie sauvegardée dans la mémoire 5 à celle qui est reçue et la remplace par celle-ci, automatiquement ou après confirmation de l'utilisateur, si ces cartographies sont différentes.

La phase de guidage dynamique se déroule différemment dans une zone locale et dans une zone plus étendue.

Si la destination désignée par l'utilisateur se situe dans la base de donnée locale, la procédure est identique à celle décrite dans la première variante du troisième mode de réalisation.

Par contre, si la destination choisie se situe au-delà de la zone locale autour du serveur 2, par exemple dans une ville différente de la ville où est localisé le véhicule actuellement, la procédure consiste tout d'abord à établir une requête de guidage avec saisie de la destination à l'aide du module 6, en précisant la ville et l'adresse en question. Le module 17 interprète cette requête et commande le module 18 qui calcule un itinéraire optimal à partir de la base de données globale mémorisée dans la deuxième zone mémoire 20, de la base de données locale correspondant à la ville d'origine mémorisée dans la zone 19 et des informations sur le trafic routier stockées dans la troisième zone mémoire 21, itinéraire destiné à rejoindre la ville de destination par les grands axes routiers. L'adresse de destination est stockée dans la mémoire locale 19 sans être interprétée. Le guidage dynamique entre la localisation actuelle du véhicule et la ville de destination est identique au guidage décrit précédemment.

A proximité de la ville de destination, le module 3 de communication du dispositif embarqué 1 reçoit, du serveur 2, la base de données locale correspondant au réseau routier de la région entourant le serveur, et la stocke dans la deuxième zone mémoire 20 de la mémoire 5. Le module 18 de calcul d'itinéraire compare l'adresse de destination mémorisée au début du trajet avec les adresses de la base de données locale. Si l'adresse spécifiée est inconnue dans cette base, le module 18 le signale à l'utilisateur qui doit entrer à nouveau la destination souhaitée. Ensuite, le module 18 calcule l'itinéraire optimal jusqu'à la destination et effectue le guidage décrit auparavant.

Dans le cas où la destination, que ce soit une adresse ou un nom de ville, ne se situe ni dans la base de données globale ni dans la base de données locale, l'utilisateur peut saisir un point de passage parmi ceux connus du dispositif embarqué dans une liste sauvegardée, affichée à la demande. Ce sont par exemple les villes frontières situées à la limite de la base de données embarquée.

Selon une variante du procédé, au lieu de désigner au départ l'adresse de destination qui est analysée dès que le dispositif embarqué reçoit la base de données locale au voisinage de la destination, l'utilisateur ne précise que la ville de destination lors de la requête initiale et, lorsque le dispositif embarqué reçoit la base de données locale à proximité de la destination, il demande à l'utilisateur de saisir l'adresse de la destination.

Le système de guidage dynamique selon l'invention fonctionne grâce à la modélisation des routes du réseau routier.
Cette modélisation peut s'opérer sous une forme compactée, par exemple, par une fonction dont la représentation géométrique s'approche de la réalité de la route à modéliser, par des carrefours d'extrémité et une incertitude maximale qui est fonction de la distance entre les deux carrefours, de la longueur de la route, et d'autres paramètres.

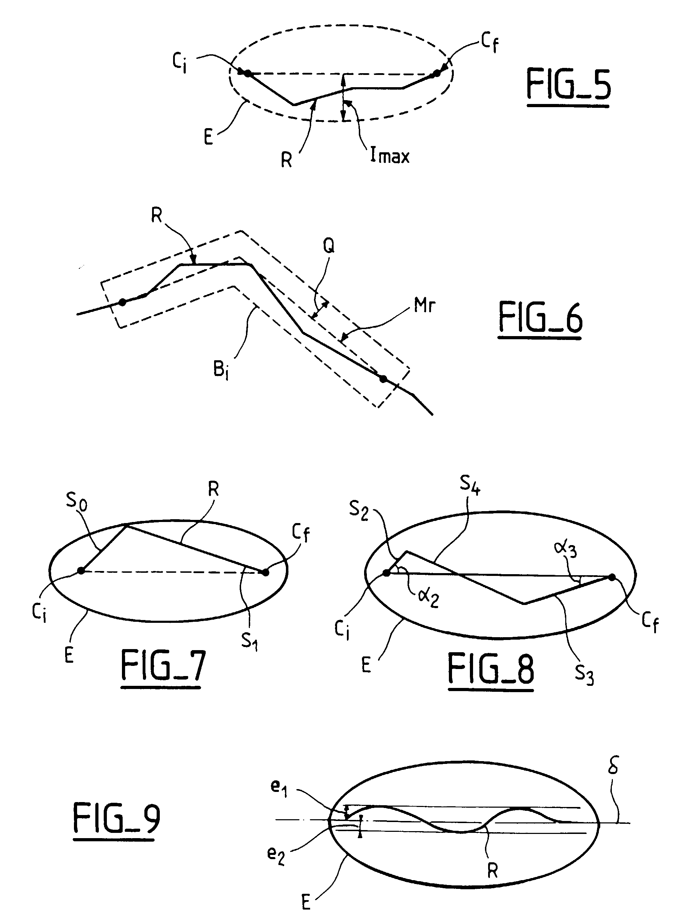

Le processus de modélisation sous une forme compacte des tronçons routiers de la base de données, est réalisé lors de la constitution de la base de données cartographiques de façon définitive. Dans une base de données de type GDF, une route est une succession de tronçons élémentaires ou vecteurs, reliés bout à bout. Plus la forme de la route est complexe, en raison de virages, plus il faut découper finement la représentation de la route, ce qui génère un nombre important de vecteurs. Dans un système simplifié, la route est définie par les coordonnées géographiques de ses extrémités, c'est-à-dire le carrefour initial Ci et le carrefour final C_{f}, et par sa longueur réelle, ce qui définit une ellipse E, d'incertitude maximale Iₘₐₓ, dans laquelle se situe obligatoirement la route R comme le montre la figure 5. La modélisation selon l'invention permet de réduire sensiblement l'incertitude sur la position de la route sans augmenter le nombre de segments représentatifs. Pour cela, elle tient compte du fait qu'une majorité de routes ont des formes similaires, telles que lignes droites, un ou deux coudes, arc de cercle ..., que l'on peut classer en un petit nombre de modèles de route.

Le principe de cette modélisation consiste à rechercher, parmi les modèles pré-définis, le modèle le plus proche de la route considérée, en mesurant l'écart entre la route et le modèle, selon un seuil réglable en fonction de la précision recherchée, appelée qualité du modèle Q.

Si cet écart est trop important, la route doit être découpée en plusieurs tronçons que l'on modélisera à leur tour. Le résultat est l'obtention, pour chaque route, de son modèle Mᵣ et de la qualité Q associée, comme le montre la figure 6 représentant la modélisation d'une route R. A ce modèle est associé une bande d'incertitude Bᵢ, c'est-à-dire une surface optimisée incluant de façon certaine la vraie route, dont la largeur est égale à deux fois la qualité et qui est centrée sur le modèle.

Selon un premier modèle, la route R est composée de deux segments S₀ et S₁ à l'intérieur de l'ellipse E (figure 7).

Selon un deuxième modèle, la route est composée de trois segments, deux segments extrêmes S₂ et S₃ partant des carrefours extrémités, dont on connaît les angles α₂ et α₃ d'inclinaison par rapport à l'axe de l'ellipse d'incertitude, et un segment intermédiaire S₄ les reliant (figure 8).

Certaines routes au tracé tortueux ne peuvent être modélisées simplement, mais oscillent au voisinage de l'axe de l'ellipse E d'incertitude les incluant, comme le montre la figure 9. Leur modèle indique explicitement la valeur maximale de l'écart latéral de chaque côté e₁ et e₂ de l'axe principal δ de l'ellipse E.

L'ensemble des modèles peut être connu à l'avance du serveur central et du dispositif embarqué.
Dans ce cas, un simple numéro de modèle suffit à l'identifier et seuls cet identificateur et les conditions limites aux extrémités de chaque tronçon de route sont à transmettre et à mémoriser.
Dans le cas contraire, les modèles de routes doivent être transmis au dispositif embarqué avec les autres données, sous un formalisme compréhensible par ce dernier.

Dans un mode de réalisation particulier, on peut appliquer aux données transmises, dont les modèles paramétriques de routes, les codages de données connus actuellement pour réduire encore la taille des informations à transmettre ou mémoriser.

La modélisation paramétrique des tronçons du réseau routier est soit faite définitivement au niveau du serveur central et le même niveau de service est proposé à l'ensemble des utilisateurs, soit adaptée dynamiquement et en temps réel d'une part aux contraintes qu'imposent les capacités de communication et de traitement du dispositif embarqué, et d'autre part aux besoins des divers utilisateurs, comme la précision de l'application par exemple.

Pour permettre cette gestion dynamique du service de modélisation, le dispositif embarqué doit communiquer, dans la requête qu'il envoie au serveur distant, des spécifications telles que la précision souhaitée, éventuellement définie par catégorie d'axes, la capacité de la mémoire embarquée disponible pour sauvegarder les modèles de routes, ou la capacité de traitement des modèles, dans le but de ne recevoir que des modèles susceptibles d'être traités. Le serveur ne transmet alors que les éléments nécessaires, comme les carrefours principaux par exemple ou bien tous les carrefours, des modèles paramétriques simples ou complexes, etc ... .

De même, il est possible de combiner les modes de représentation des routes avec les modes de transmission de l'information, en diffusant à l'ensemble des utilisateurs, par exemple en mode broadcast du G.S.M., une information sommaire, c'est-à-dire le réseau principal avec uniquement les carrefours principaux chaînés, sans information routière, avec seulement sur demande de l'utilisateur la transmission d'informations plus précises, comme le réseau local proche de la destination ou des détours en cas de problème de circulation.

Les avantages de ce système de guidage dynamique selon l'invention sont tout d'abord son coût limité qui le rend accessible à des conducteurs n'ayant pas une utilisation intensive de la fonction de guidage, grâce à la cartographie du réseau routier s'appuyant sur les modèles paramétriques de routes qui prend peu de place en mémoire et ne nécessite pas de communications longues. C'est ensuite la mise à jour des cartographies qui est résolue. Soit aucune base de données ne réside de façon permanente dans le dispositif embarqué dans le véhicule, mais sont téléchargées. Soit les bases de données cartographiques mémorisées dans le véhicule sont mises à jour par téléchargement en provenance d'un serveur distant. Cet avantage s'applique aussi bien aux mises à jour logicielles des applications embarquées pouvant être téléchargées qu'au téléchargement de nouveaux modèles de routes. Les mises à jour sont transparentes pour l'utilisateur qui dispose ainsi toujours d'une configuration exacte.

De plus, en cas de service basé sur des requêtes de l'utilisateur à un serveur distant par communication bidirectionnelle, la taille réduite des cartographies diminue le temps de réponse aux requêtes des divers clients et donc permet de traiter un plus grand nombre de requêtes simultanément. C'est un facteur important intervenant dans le dimensionnement du système de guidage en faveur d'une réduction des coûts, donc du coût de la prestation.

## Revendications

1. Système de guidage routier dynamique d'un véhicule, comprenant un dispositif embarqué dans le véhicule recevant des informations d'un serveur distant du véhicule et comprenant :
- un premier module mobile (3) de communication avec le serveur ;
- un module (4) de localisation délivrant la position géographique du véhicule ;
- une mémoire (5) destinée à stocker les données reçues du serveur distant ;
- un module (6) de commande permettant la saisie des requêtes de l'utilisateur ;
- un module (7) de restitution de l'information sur le trafic routier et/ou de présentation des informations de guidage ;
- une première unité (8) de traitement électronique ;
caractérisé en ce que ledit serveur distant (2) comprend :
- un second module fixe (9) de communication avec le dispositif embarqué (1) ;
- une base de données cartographiques détaillée (10) ;
- une base de données cartographiques simplifiée (11) ;
- une base de données d'informations sur le trafic routier (12) ;
- une seconde unité (13) de traitement électronique.

2. Système de guidage routier dynamique d'un véhicule selon la revendication 1, caractérisé en ce que la base de données cartographiques simplifiée (11) est basée sur des modèles paramétriques de route, générée à partir de la base de données cartographiques détaillée (10).

3. Système de guidage routier dynamique d'un véhicule selon la revendication 1, caractérisé en ce que la base de données cartographiques détaillée (10) et la base de données d'informations sur le trafic routier (12) sont extérieures au serveur distant (2) et accessibles par un réseau de télécommunication, par exemple au travers d'Internet.

4. Système de guidage routier dynamique d'un véhicule selon l'une des revendications 1 à 3, caractérisé en ce que, dans le dispositif (1) embarqué dans le véhicule :
- le premier module (3) de communication est bidirectionnel permettant l'échange réciproque de données et de paroles entre le dispositif embarqué (1) et le serveur distant (2) ;
- la mémoire (5) stocke les données et les messages vocaux envoyés par le serveur distant concernant l'itinéraire et les modèles de routes utiles pour reconstituer les routes à partir de la base de données cartographiques simplifiée ;
- le module (7) est constitué d'un haut-parleur assurant la diffusion des informations sonores sur le trafic routier et d'un afficheur pour la présentation des informations de guidage ;
- la première unité (8) de traitement électronique comprend un module (16) de suivi de la position du véhicule sur son itinéraire ;
et en ce que, dans le serveur distant (2) :
- le second module (9) de communication est bidirectionnel permettant l'échange réciproque de données et de paroles entre le serveur et le dispositif embarqué ;
- la seconde unité (13) de traitement électronique comprend un module (14) d'interprétation des requêtes de l'utilisateur, envoyées par le dispositif embarqué, et un module (15) de calcul d'itinéraire optimal à partir des données issues de la base de données cartographiques simplifiée (11) et de la base (12) de données sur les informations du trafic routier.

5. Système de guidage routier dynamique d'un véhicule selon l'une des revendications 1 à 3, caractérisé en ce que, dans le dispositif (1) embarqué dans le véhicule:
- le premier module (3) de communication est bidirectionnel permettant l'échange réciproque de données et de paroles entre le dispositif embarqué (1) et le serveur distant (2) ;
- la mémoire (5) stocke, dans une première zone (19), les données concernant l'itinéraire reçues du serveur distant, et dans une deuxième zone (20), les modèles de route utiles pour reconstituer les routes à partir de la base de données cartographiques simplifiée (11), et un extrait de ladite base correspondant à une bande de déplacement du véhicule autour de l'itinéraire calculé par le serveur ;
- la première unité de traitement électronique (8) comprend un module (17) d'interprétation des requêtes de l'utilisateur provenant du module de saisie (6), un module (16) de suivi de position du véhicule sur son itinéraire et un module (18) de calcul d'itinéraire optimal à partir de la base de données cartographiques partielle (11) ;
et en ce que, dans le serveur distant (2),
- le second module (9) de communication est bidirectionnel permettant l'échange réciproque de données et de paroles entre le serveur et le dispositif embarqué ;
- la seconde unité de traitement électronique (13) comprend un module (14) d'interprétation des commandes de l'utilisateur provenant du dispositif embarqué et un module (15) de calcul d'itinéraire optimal à partir de la base de données cartographiques simplifiée (11) et de la base de données (12) d'informations sur le trafic routier.

6. Système de guidage routier dynamique d'un véhicule selon l'une des revendications 1 à 3, caractérisé en ce que, dans le dispositif embarqué (1) dans le véhicule:
- le premier module de communication (3) est unidirectionnel, du serveur distant (2) vers le dispositif embarqué ;
- la mémoire (5) stocke, dans une première zone (19), des informations reçues du serveur distant telles que les informations de trafic routier, dans une deuxième zone (20), la base de données cartographiques simplifiée (11) reçue du serveur et, dans une troisième zone (21) les modèles de route utiles pour reconstituer les routes à partir de la cartographie simplifiée ;
- la première unité de traitement électronique (8) comprend un module (17) d'interprétation des requêtes de l'utilisateur provenant du module de saisie (6), un module (16) de suivi de position du véhicule sur son itinéraire et un module (18) de calcul d'itinéraire optimal à partir de la base de données cartographiques partielle (11) ;
et en ce que, dans le serveur distant (2) :
- le deuxième module de communication (9) est un émetteur unidirectionnel permettant la diffusion d'informations vers le dispositif embarqué.

7. Système de guidage routier dynamique d'un véhicule selon l'une des revendications 1 à 3, caractérisé en ce que, dans le dispositif embarqué (1) dans le véhicule:
- le premier module de communication (3) est bidirectionnel autorisant des communications point à point entre le serveur distant (2) et le dispositif embarqué ;
- la mémoire (5) stocke, dans une première zone (19), des informations reçues du serveur distant telles que les informations de trafic routier, dans une deuxième zone (20), la base de données cartographiques simplifiée (11) reçue du serveur et, dans une troisième zone (21) les modèles de route utiles pour reconstituer les routes à partir de la cartographie simplifiée ;
- la première unité de traitement électronique (8) comprend un module (17) d'interprétation des requêtes de l'utilisateur provenant du module de saisie (6), un module (16) de suivi de position du véhicule sur son itinéraire et un module (18) de calcul d'itinéraire optimal à partir de la base de données cartographiques simplifiée (11) ;
et en ce que, dans le serveur distant (2) :
- le deuxième module de communication (9) est un récepteur-émetteur bidirectionnel entre le dispositif embarqué et le serveur distant.

8. Procédé de guidage d'un véhicule équipé d'un système de guidage dynamique selon la revendication 4, caractérisé en ce qu'il comprend :
- une première phase de demande de guidage du véhicule, par le dispositif embarqué, comprenant :
* l'établissement d'une communication avec le serveur distant (2) à l'aide du premier (3) et du second (9) modules de communication ;
* la composition d'une requête par l'utilisateur, comprenant la destination vers laquelle le véhicule doit être guidé et, éventuellement, plusieurs points de passage ;
* l'envoi de la position actuelle du véhicule par le module de localisation (4) ;
- une deuxième phase de calcul d'un itinéraire optimal en temps et en distance entre la position actuelle du véhicule et sa destination désignée, par le serveur distant (2), comprenant :
* une interprétation de la requête par le module (14) d'interprétation de la seconde unité de traitement électronique (13), qui la traduit pour le module (15) de calcul d'itinéraire et qui lui envoie de plus la localisation actuelle du véhicule ;
* un calcul d'itinéraire optimal à partir de la base de données cartographiques simplifiée (11) et de la base de données (12) d'informations sur le trafic routier, itinéraire constitué de coordonnées géographiques de points du réseau routier et de tronçons modélisés dans la base de données cartographiques simplifiée, auxquelles sont associées des informations textuelles ou vocales correspondant aux directions à suivre ;
* la transmission des informations vocales correspondant aux directions à suivre et des informations numériques sur l'itinéraire, par le module de communication du serveur ;
- une troisième phase de guidage dynamique réalisée par le dispositif embarqué, comprenant :
* la mise en mémoire (5) de ces informations transmises par le serveur ;
* la reconstitution des routes de l'itinéraire par le module (16) de suivi de position de la première unité (8) de traitement électronique, à partir des modèles de route transmis par le serveur ;
* l'identification de la route de circulation du véhicule et de sa position sur cette route par le module (16) de suivi de position ;
* la comparaison entre le trajet du véhicule et l'itinéraire calculé à l'aide des modèles paramétriques des tronçons ;
* l'affichage des indications textuelles correspondant au guidage et l'émission du message vocal si le véhicule circule sur ledit itinéraire.

9. Procédé de guidage d'un véhicule équipé d'un système de guidage dynamique selon la revendication 5, caractérisé en ce qu'il comprend :
- une première phase de demande de guidage du véhicule, par le dispositif embarqué, comprenant :
* l'établissement d'une communication avec le serveur distant (2) à l'aide des premier (3) et second (9) modules de communication ;
* la composition d'une requête par l'utilisateur, comprenant la destination vers laquelle le véhicule doit être guidé et, éventuellement, plusieurs points de passage ;
* l'envoi de la position actuelle du véhicule par le module de localisation (4) ;
- une deuxième phase de calcul d'un itinéraire optimal entre la position actuelle du véhicule et sa destination désignée, par le serveur distant (2), comprenant :
* une interprétation de la requête par le module (14) d'interprétation de la seconde unité de traitement électronique (13), qui la traduit pour le module (15) de calcul d'itinéraire et qui lui envoie de plus la localisation actuelle du véhicule ;
* un calcul d'itinéraire optimal à partir de la base de données cartographiques simplifiée (11) et de la base de données (12) d'informations sur le trafic routier, itinéraire constitué de coordonnées géographiques de points du réseau routier et de tronçons modélisés dans la base de données cartographiques simplifiée, auxquelles sont associées des informations textuelles ou vocales correspondant aux directions à suivre ;
* la transmission des informations vocales correspondant aux directions à suivre et des informations numériques sur l'itinéraire, par le module de communication du serveur ;
- une troisième phase de détermination d'une bande de déplacement autour de l'itinéraire précédemment calculé, définie selon des critères géométriques, constituant un extrait de la base de données cartographiques simplifiée, suivie de sa transmission au dispositif embarqué sous forme de données numériques ;
- une quatrième phase de guidage dynamique réalisée par le dispositif embarqué, comprenant :
* la mise en mémoire (5) de ces informations transmises par le serveur ;
* la reconstitution des routes de l'itinéraire par la module (16) de suivi de position de la première unité de traitement électronique, à partir des identificateurs de modèles de route transmis par le serveur, comparés à des modèles déjà stockés dans la mémoire ;
* l'identification de la route de circulation du véhicule et de sa position sur cette route par le module (16) de suivi de position ;
* la comparaison entre le trajet du véhicule et l'itinéraire calculé à l'aide des modèles paramétriques des tronçons ;
* l'affichage des indications textuelles correspondant au guidage et l'émission du message vocal.

10. Procédé de guidage d'un véhicule selon la revendication 9, caractérisé en ce que, lors de l'étape de comparaison du trajet suivi par le véhicule avec l'itinéraire calculé par le serveur distant, le module (16) de suivi de position du dispositif embarqué réalise les étapes suivantes :
- l'émission d'une indication de guidage à l'utilisateur si le véhicule circule sur l'itinéraire calculé et se rapproche d'un point de décision, tel une intersection ;
- le calcul d'un nouvel itinéraire si le véhicule circule hors de l'itinéraire calculé mais sur un axe routier appartenant à la bande de déplacement déterminée, et l'émission d'informations de guidage vers l'itinéraire initialement calculé, puis vers la destination donnée ;
- l'affichage d'une indication de direction vers un point de la bande de déplacement déterminée autour de l'itinéraire, ou vers la destination donnée, si le véhicule circule hors de ladite bande de déplacement.

11. Procédé de guidage d'un véhicule selon la revendication 10, caractérisé en ce que la bande de déplacement est définie selon des critères géométriques, comme la largeur de bande, pouvant diminuer quand on se rapproche du point de destination, et variant également en fonction de la longueur de l'itinéraire, soit en étant d'autant plus étroite que l'itinéraire est long.

12. Procédé de guidage d'un véhicule équipé d'un système de guidage dynamique selon l'une des revendications 6 ou 7, caractérisé en ce qu'il comprend une première partie composée de :
- une première phase de transmission périodique de la base de données cartographiques simplifiée (11) du serveur distant vers le dispositif embarqué, avec un identificateur de version, et de transmission permanente des informations de trafic routier en provenance de la base de données d'informations trafic (12) ;
- une deuxième phase de mémorisation de ladite base de données cartographiques simplifiée dans une première zone (20) de la mémoire (5) du dispositif embarqué, et des informations trafic dans une deuxième zone de ladite mémoire ;
- une troisième phase de comparaison de l'identificateur de la version de la base de données transmise avec l'identificateur de la version déjà mémorisée, et de mémorisation de la nouvelle version transmise si l'identificateur est différent ;
et une deuxième partie de guidage dynamique du véhicule par l'unité de traitement du dispositif embarqué, composée de :
* la composition d'une requête par l'utilisateur, avec la destination et éventuellement des points de passage ;
* l'interprétation de la requête par le module (17) de la première unité de traitement (8) qui envoie une commande au module (18) de calcul d'itinéraire, avec la localisation actuelle du véhicule ;
* le calcul d'un itinéraire optimal à partir de la base de données cartographiques simplifiée (11), des informations sur le trafic routier et de la position actuelle du véhicule, par le module de calcul (18) ;
* la reconstitution des routes de l'itinéraire par le module (16) de suivi de position, à partir des identificateurs de modèles de route stockés dans la troisième zone (21) de la mémoire (5) ;
* l'identification de la route de circulation du véhicule et de sa position sur cette route par le module (16) de suivi de position ;
* la comparaison entre le trajet du véhicule et l'itinéraire calculé ;
* la délivrance d'informations de guidage si le véhicule circule sur ledit itinéraire.

13. Procédé de guidage d'un véhicule selon les revendications 7 et 12, caractérisé en ce que la première phase de transmission de la base de données cartographiques simplifiée (11) s'effectue après avertissement de l'utilisateur par le module (9) de communication du serveur (2) et demande par l'utilisateur du téléchargement de cette base de données par le module (3) du dispositif embarqué (1).

14. Procédé de guidage d'un véhicule selon l'une des revendications 12 ou 13, caractérisé en ce que la base de données cartographiques simplifiée (11) est décomposée en une première base de données globale comprenant essentiellement les grands axes de circulation interurbains dans une zone géographique étendue et en une seconde base de données locale comprenant une zone limitée au voisinage du serveur (2).

15. Procédé de guidage d'un véhicule selon la revendication 14, caractérisé en ce que la transmission de la base de données simplifiée (11) par le module (9) de communication du serveur (2) se déroule en deux étapes :
* une transmission périodique de la base de données globale ;
* une transmission de chaque base de données locales autour des différents serveurs rencontrés sur le parcours du véhicule, avec émission d'un identificateur et d'un numéro de version pour permettre la mise à jour desdites bases locales.

16. Procédé de guidage d'un véhicule selon la revendication 14, caractérisé en ce que, si la destination choisie par l'utilisateur se situe au-delà de la base de données locale correspondant au serveur rencontré sur le parcours du véhicule comporte les étapes suivantes remplies par le dispositif embarqué :
* l'établissement d'une requête de guidage avec saisie de la destination à l'aide du module (6) de saisie des requêtes ;
* l'interprétation de la requête par le module (17) ;
* le calcul d'un itinéraire optimal par le module (18) à partir des bases de données globale et locale mémorisées et des informations trafic reçues du serveur (2).

17. Procédé de guidage d'un véhicule selon l'une des revendications 4 ou 5, caractérisé en ce que les informations numériques sur l'itinéraire, transmises par le second module (9) de communication du serveur distant (2) vers le dispositif embarqué (1) sont constituées par :
- les coordonnées géographiques des points du réseau routier ;
- les caractéristiques des tronçons de route ;
- les identificateurs des modèles de route ;
- les informations textuelles correspondant aux directions à suivre ;
- la distance des points du réseau routier à laquelle sont émises les informations vocales ;
- la longueur des messages vocaux.

18. Procédé de guidage d'un véhicule selon la revendication 8, lors de la comparaison entre le trajet du véhicule et l'itinéraire calculé, le module (16) de suivi de position peut détecter une sortie de cet itinéraire calculé, et commander au module (7) de présentation des informations de délivrer une indication de direction vers un point de cet itinéraire, sous forme d'affichage d'une flèche graphique notamment.

19. Procédé de guidage d'un véhicule selon l'une des revendications 4 ou 5, le module (14) d'interprétation des requêtes vocales de l'utilisateur, du dispositif embarqué 1, est constitué de moyens de reconnaissance de la parole, éventuellement complétés par un opérateur en cas d'échec des algorithmes de reconnaissance de la parole.

20. Procédé de guidage d'un véhicule selon l'une des revendications 1 à 7, caractérisé en ce que le module (6) de saisie des requêtes est réalisé à l'aide de boutons, d'une surface tactile, d'une boule de désignation, d'une télécommande ou d'un microphone.

21. Procédé de guidage d'un véhicule selon l'une des revendications 5, 6 ou 7, caractérisé en ce que les bases de données cartographiques détaillée (10) et simplifiée (11) et la base de données d'informations trafic (12) sont téléchargées en provenance du serveur distant, ainsi que leurs mises à jour, et les modèles de route sous un formalisme compréhensible par le dispositif embarqué (1) sur le véhicule.

22. Procédé de guidage d'un véhicule selon la revendication 2, caractérisé en ce que la modélisation des routes du réseau routier s'opère sous une forme compactée par une fonction dont la représentation géométrique s'approche de la réalité de la route à modéliser, par des carrefours d'extrémité et une incertitude maximale qui est fonction de la distance entre lesdits carrefours d'extrémité, de la longueur de la route entre autres paramètres.

23. Procédé de guidage d'un véhicule selon l'une des revendications 2 ou 22, caractérisé en ce que la modélisation paramétrique des tronçons du réseau routier est adaptée dynamiquement et en temps réel d'une part aux capacités de communication et de traitement du dispositif embarqué (1) sur le véhicule, et d'autre part aux spécifications demandées par l'utilisateur dans sa requête.
